# EUROPEAN PATENT APPLICATION

(11) **EP 4 614 442 A1**
(43) Date of publication of application: **10.09.2025**
(21) Application number: 23911483.8
(22) Date of filing: 24.11.2023
(51) Int. Cl.: G06T 7/60, G06V 10/77, G06V 10/774, G06V 20/05

(54) **INFORMATION PROCESSING PROGRAM, INFORMATION PROCESSING DEVICE, AND INFORMATION PROCESSING METHOD**

(30) Priority: 27.12.2022 JP 2022210796
(71) Applicant: Softbank Corp., Tokyo 105-7529 (JP)
(72) Inventor: ISHIWAKA, Yuko, Tokyo 105-7529 (JP); OGAWA, Shun, Tokyo 105-7529 (JP); TONE, Tadayuki, Tokyo 105-7529 (JP); YOSHIDA, Tomohiro, Tokyo 105-7529 (JP)
(74) Representative: SSM Sandmair
(86) International application number: PCT/JP2023/042251
(87) International publication number: WO 2024/142701

(57) **Abstract**

An information processing program causes a computer to execute: an acquisition process of acquiring an image including a fish group, the image including an indistinct region that is a region where individual fish included in the fish group are unable to be visually distinguished, and a shadow region corresponding to a shadow of a fish group corresponding to the indistinct region; and an estimation process of estimating information related to a volume of space between fish included in the fish group corresponding to the indistinct region, and estimating, based on of the information related to the volume of the space between the fish, a fish count for the fish included in the fish group corresponding to the indistinct region.

## Description

### Field

The present invention relates to an information processing program, an information processing apparatus, and an information processing method.

### Background

Various techniques for improving fish cultivation technology have been known conventionally. For example, preset feature values that change according to the number of fish (also referred to as a fish count) are extracted from a captured image having, captured therein, fish in a fishpond. In a known technique, the extracted feature values are matched against a trained model obtained by machine learning and corresponding to relational data between feature values and fish counts, and a fish count is detected from the trained model.

### Citation List

### Patent Literature

Patent Literature 1: International Publication Pamphlet No. WO 2019/045091

### Summary

### Technical Problem

However, in the above mentioned conventional technique, only estimation of a fish count for fish included in an area of an image is done by use of the trained model trained by machine learning, the area being where individual fish are able to be visually distinguished, and estimation of a fish count for fish included in a fish group corresponding to an area of the image is thus not necessarily possible, the area being where individual fish are unable to be visually distinguished.

### Solution to Problem

An information processing program causes a computer to execute: an acquisition process of acquiring an image including a fish group, the image including an indistinct region that is a region where individual fish included in the fish group are unable to be visually distinguished, and a shadow region corresponding to a shadow of a fish group corresponding to the indistinct region; and an estimation process of estimating information related to a volume of space between fish included in the fish group corresponding to the indistinct region, and estimating, on the basis of the information related to the volume of the space between the fish, a fish count for the fish included in the fish group corresponding to the indistinct region.

### Advantageous Effects of Invention

According to an aspect of an embodiment, an effect of enabling estimation of a fish count for fish included in a fish group corresponding to an area of an image is achieved, the area being where individual fish are unable to be visually distinguished.

### Brief Description of Drawings

FIG. 1 is a diagram illustrating an example of a fish group in a fishpond.
FIG. 2 is diagram illustrating an example of a configuration of an information processing apparatus according to an embodiment.
FIG. 3 is a diagram for illustration of: a cluster of a fish group corresponding to an indistinct region; and a shadow of the fish group corresponding to the indistinct region.
FIG. 4 is a diagram illustrating an example of a CG image according to the embodiment.
FIG. 5 is a diagram for illustration of a relation between a cluster of a fish group corresponding to an indistinct region and personal space of fish.
FIG. 6 is a diagram for illustration of an example of personal space of fish.
FIG. 7 is a diagram for illustration of the example of the personal space of the fish.
FIG. 8 is a diagram for illustration of a process of estimating personal space of fish on the basis of a red image including a fish group irradiated with red light.
FIG. 9 is a flowchart illustrating information processing processes by an information processing apparatus according to the embodiment.
FIG. 10 is a hardware configuration diagram illustrating an example of a computer that implements functions of the information processing apparatus. Description of Embodiments

A mode for implementing an information processing program, an information processing apparatus, and an information processing method, according to the present application (hereinafter, referred to as an "embodiment") will hereinafter be described in detail while reference is made to the drawings. The information processing program, the information processing apparatus, and the information processing method, according to the present application, are not to be limited by this embodiment. Furthermore, for the following embodiment, the same reference sign will be assigned to parts that are the same and redundant description thereof will be omitted.

### Embodiment

### 1. Introduction

In recent years, fish cultivation has gained attention as a means to address global food problems. Accurately knowing a fish count highly relevant to feeding (feeding of fish) is important in supplying high quality fish by fish cultivation.

However, utilizing terrestrial information technology may be difficult in water in fish farms, a special environment. Therefore, what has been done conventionally is that a person makes a fish count by visual inspection after scooping some of fish with a net and weighing them. This method has problems in that the method imposes strain on the fish and lacks accuracy.

A method of automatically making a fish count for a fish group (also referred to as a group of fish) in a fishpond from a captured image having the fish group captured therein by using computer vision has thus gained attention in recent years. Specifically, this method is a method of training a machine learning model for image recognition so that the machine learning model estimates a fish count for a fish group from a captured image. More specifically, by use of the trained machine learning model, individual fish in the captured image are detected and a total number of the individual fish detected is calculated as the fish count. That is, in this conventional method, by use of the machine learning model that has been trained, a fish count for fish included in an area of a captured image, in which individual fish in the captured image are able to be visually distinguished, is estimated, the area being where the individual fish are able to be visually distinguished.

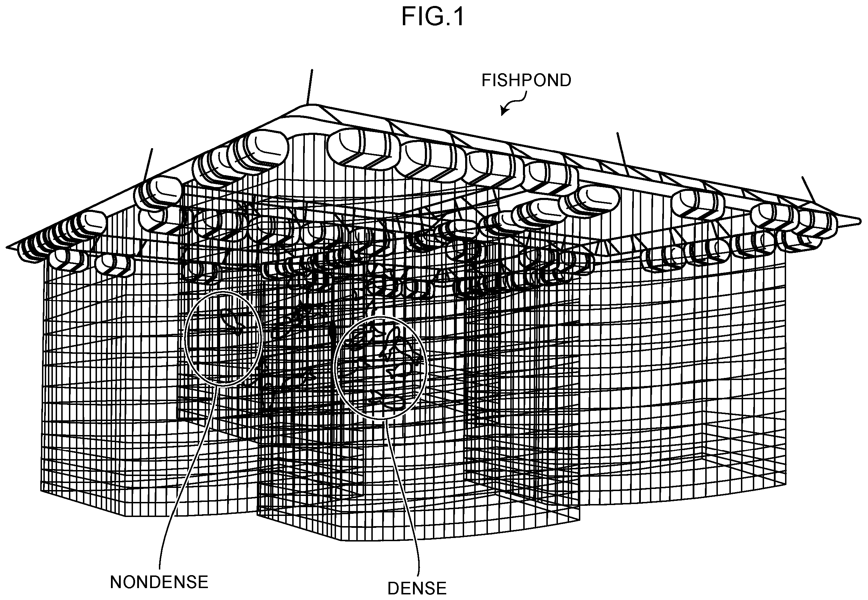

However, in practice, there are captured images, in which individual fish in the captured images are unable to be visually distinguished. This point will be described by use of FIG. 1. FIG. 1 is a diagram illustrating an example of a fish group in a fishpond. For example, as illustrated in FIG. 1, a fish group of a species of fish that do not gather together in the wild, such as red sea bream, is known to have both: a region (dense region) where fish cluster together and the density of the fish is very high; and a region (nondense region) where fish are sparsely present and the density of the fish is very low. The individual fish in a portion of a captured image having the fish group captured therein are able to be visually distinguished, the portion corresponding to the nondense region, the fish group being in the fishpond illustrated in FIG. 1. Therefore, for the portion corresponding to the nondense region, the individual fish in the captured image are able to be detected and a total number of the individual fish detected is able to be calculated as a fish count, by use of a conventional trained machine learning model. However, boundaries between the fish are visually indistinct in a portion corresponding to the dense region of the captured image having the fish group captured therein, the fish group being in the fishpond illustrated in FIG. 1, and even if the captured image is checked, that portion can only be seen as a mere dark cluster and the individual fish in the captured image are thus unable to be visually distinguished and detected by being counted one by one. That is, for the portion corresponding to the dense region, detecting the individual fish in the captured image and calculating a total number of the individual fish detected as a fish count by use of the conventional trained machine learning model is very difficult.

By contrast, an information processing apparatus 100 according to an embodiment acquires an image including a fish group and including: an indistinct region that is a region where individual fish included in the fish group are unable to be visually distinguished; and a shadow region corresponding to a shadow of a fish group corresponding to the indistinct region. Furthermore, the information processing apparatus 100 estimates information related to a volume of space between fish included in the fish group corresponding to the indistinct region and estimates, on the basis of the information related to the volume of the space between the fish, a fish count for the fish included in the fish group corresponding to the indistinct region. The information processing apparatus 100 is thereby able to estimate the fish count for the fish included in the fish group corresponding to the indistinct region, for example, by dividing a volume of a cluster of the fish group corresponding to the indistinct region by a volume resulting from addition of the volume of the space between the fish included in the fish group corresponding to the indistinct region and a volume of the fish together. Therefore, the information processing apparatus 100 is able to estimate the fish count for the fish included in the fish group corresponding to the region of the image, the region being where the individual fish are unable to be visually distinguished.

Types of dimensions indicating sizes of fish include the total length, standard length (body length), fork length, body depth, and body width, of the fish. The term, "sizes of fish", referred to in the specification of the present application is a concept including sizes of fish measured by any of dimensions including the total length, standard length (body length), fork length, body depth, and body width, of the fish.

A case where an image is a moving image will be described hereinafter. The image may be a still image.

### 2. Configuration of Information Processing Apparatus

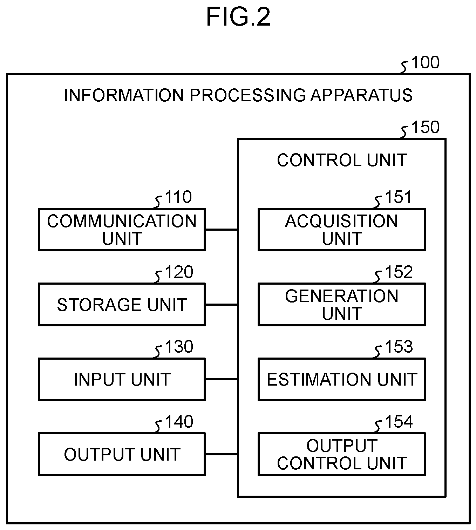

FIG. 2 is a diagram illustrating an example of a configuration of the information processing apparatus 100 according to the embodiment. The information processing apparatus 100 has a communication unit 110, a storage unit 120, an input unit 130, an output unit 140, and a control unit 150.

### Communication Unit 110

The communication unit 110 is implemented by, for example, a network interface card (NIC). The communication unit 110 is connected to a network by wire or wirelessly, and transmits and receives information to and from, for example, a terminal device and an imaging device used by a manager who manages fish.

### Storage Unit 120

The storage unit 120 is implemented by, for example: a semiconductor memory element, such as a random access memory (RAM) or a flash memory; or a storage device, such as a hard disk or an optical disk. Specifically, the storage unit 120 stores various programs (an example of an information processing program).

### Input Unit 130

Various kinds of operation are input to the input unit 130 by a user. For example, the input unit 130 may receive various kinds of operation from a user via a display screen (for example, the output unit 140) by a touch panel function. Furthermore, the input unit 130 may receive various kinds of operation from buttons provided on the information processing apparatus 100 and a keyboard and a mouse that are connected to the information processing apparatus 100.

### Output Unit 140

The output unit 140 is, for example, a display device that is a display screen implemented by a liquid crystal display or an organic electroluminescence (EL) display and that is for displaying various kinds of information. According to control by the control unit 150, the output unit 140 displays various kinds of information. In a case where a touch panel is adopted in the information processing apparatus 100, the input unit 130 and the output unit 140 are integrated with each other. The output unit 140 may be referred to as a screen in the following description.

### Control Unit 150

The control unit 150 is a controller, and is implemented by execution of various programs (corresponding to an example of the information processing program) stored in a storage device inside the information processing apparatus 100 by, for example, a central processing unit (CPU) or a micro processing unit (MPU), with a RAM serving as a work area. Furthermore, the control unit 150 is a controller, and is implemented by, for example, an integrated circuit, such as an application specific integrated circuit (ASIC) or a field programmable gate array (FPGA).

The control unit 150 has functional units that are an acquisition unit 151, a generation unit 152, an estimation unit 153, and an output control unit 154, and may implement or execute action of information processing described hereinafter. The internal configuration of the control unit 150 is not limited to the configuration illustrated in FIG. 2 and may be any other configuration that performs the information processing described later. Furthermore, these functional units represent functions of the control unit 150 and are not necessarily differentiated from one another physically.

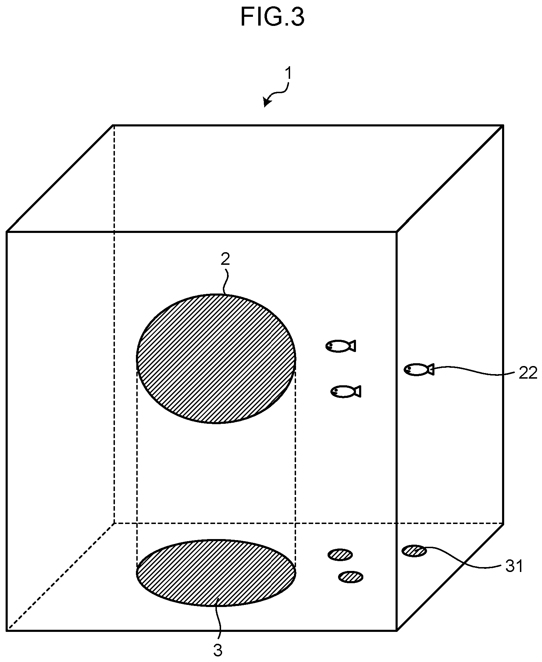

FIG. 3 is a diagram for illustration of: a cluster of a fish group corresponding to an indistinct region and a shadow of the fish group corresponding to the indistinct region. An "indistinct region" herein refers to a region of an image including a fish group, the region being where individual fish included in the fish group are unable to be visually distinguished. In other words, an "indistinct region" refers to a region of an image including a fish group, the region being where boundaries of individual fish are visually indistinct. Furthermore, a region of the image may hereinafter be referred to as a "shadow region", the region corresponding to a shadow of the fish group corresponding to the indistinct region.

FIG. 3 illustrates a fish group in a fishpond 1. There are both a dense region and a nondense region, like those described by reference to FIG. 1, in the fishpond 1. A dense region may hereinafter be referred to as a "cluster of a fish group corresponding to an indistinct region". For example, the information processing apparatus 100 may detect a cluster of a fish group corresponding to an indistinct region, by using an RGB camera or a sonar. FIG. 3 illustrates a cluster 2 of a fish group corresponding to an indistinct region and a shadow 3 of the cluster 2 of the fish group corresponding to the indistinct region. Furthermore, FIG. 3 illustrates a shadow 31 of a fish 22 present in a nondense region. As described above, boundaries between fish are visually indistinct in a portion corresponding to the dense region, and even if the captured image is checked, the portion can only be seen as a mere dark cluster and the individual fish in the captured image are thus unable to be visually distinguished and detected by being counted one by one. Therefore, for a cluster of the fish group corresponding to the indistinct region, the information processing apparatus 100 estimates a fish count for that cluster. Furthermore, the information processing apparatus 100 estimates a fish count for fish in the whole fishpond by totaling up the fish count for the cluster of the fish group corresponding to the indistinct region and a fish count for fish present in the nondense region.

Darkness of color of the shadow 3 of the cluster 2 of the fish group corresponding to the indistinct region is considered to be correlated with shortness of distances between the fish included in the fish group (density) corresponding to the indistinct region. Furthermore, lightness of the color of the shadow 3 of the cluster 2 of the fish group corresponding to the indistinct region is considered to be somewhat correlated with lengths of distances between the fish included in the fish group (nondensity) corresponding to the indistinct region. That is, a shadow region corresponding to the shadow of the fish group corresponding to the indistinct region is considered to have a correlation with a volume of space (which may hereinafter be referred to as the "personal space of fish") between the fish included in the fish group corresponding to the indistinct region. That is, information indicating the darkness of the shadow region representing the shadow 3 of the cluster 2 of the fish group corresponding to the indistinct region is considered to be a clue in estimating the volume of the space between the fish included in the fish group corresponding to the indistinct region by means of machine learning models M1 and M2 described later. The information processing apparatus 100 thus inputs input information for the machine learning models M1 and M2 described later, the input information being information (for example, R, G, and B values) indicating the darkness of the shadow region representing the shadow 3 of the cluster 2 of the fish group corresponding to the indistinct region of the image.

### Acquisition Unit 151

The acquisition unit 151 acquires an image including a fish group and including: an indistinct region that is a region where individual fish included in the fish group are unable to be visually distinguished; and a shadow region corresponding to a shadow of a fish group corresponding to the indistinct region. For example, the acquisition unit 151 may acquire an image from an imaging device via the communication unit 110.

### Generation Unit 152

The generation unit 152 generates the first machine learning model M1 that has been trained to estimate a fish count for fish included in a fish group corresponding to an indistinct region to be learnt in a case where input information that is information related to a CG image generated by computer graphics is input to the first machine learning model M1, the CG image including a fish group to be learnt, the CG image also including: the indistinct region to be learnt that is a region where individual fish included in the fish group to be learnt are unable to be visually distinguished; and a shadow region to be learnt corresponding to a shadow of the fish group corresponding to the indistinct region to be learnt. Specifically, the generation unit 152 generates the first machine learning model M1 that has been trained to output output information that is the fish count for the fish included in the fish group corresponding to the indistinct region to be learnt in a case where the input information that is the information related to the CG image is input to the first machine learning model M1, the information being: the CG image, the information related to the indistinct region to be learnt; and information related to the shadow region to be learnt.

More specifically, the generation unit 152 generates the first machine learning model M1 that has been trained to output the output information that is the fish count for the fish included in the fish group corresponding to the indistinct region to be learnt in a case where the input information that is the information related to the indistinct region to be learnt is input to the first machine learning model M1, the information being: information related to a volume of a cluster of the fish group corresponding to the indistinct region to be learnt; information related to a volume of space between the fish included in the fish group corresponding to the indistinct region to be learnt; and information related to a volume of the fish included in the fish group corresponding to the indistinct region to be learnt.

For example, the generation unit 152 generates a machine learning model M11 that outputs output information that is a volume of a cluster of a fish group corresponding to an indistinct region to be learnt in a case where input information that is information related to a CG image generated by computer graphics is input to the machine learning model M11, the CG image including a fish group to be learnt, the CG image also including: the indistinct region to be learnt that is a region where individual fish included in the fish group to be learnt are unable to be visually distinguished; and a shadow region to be learnt corresponding to a shadow of the fish group corresponding to the indistinct region to be learnt. Subsequently, by using the machine learning model M11, the generation unit 152 estimates information related to a volume of a cluster of the fish group corresponding to the indistinct region to be learnt, from the CG image. For example, by using the machine learning model M11, the generation unit 152 may estimate, as an example of the information related to the volume of the cluster of the fish group corresponding to the indistinct region to be learnt, respective lengths along X, Y, and Z axes of a cluster of a fish group in a fishpond of three dimensional CG generated by computer graphics. Subsequently, by using the machine learning model M11, the generation unit 152 may input input information that is the information estimated by use of the machine learning model M11 to the first machine learning model M1, the information being related to the volume of the cluster of the fish group corresponding to the indistinct region to be learnt.

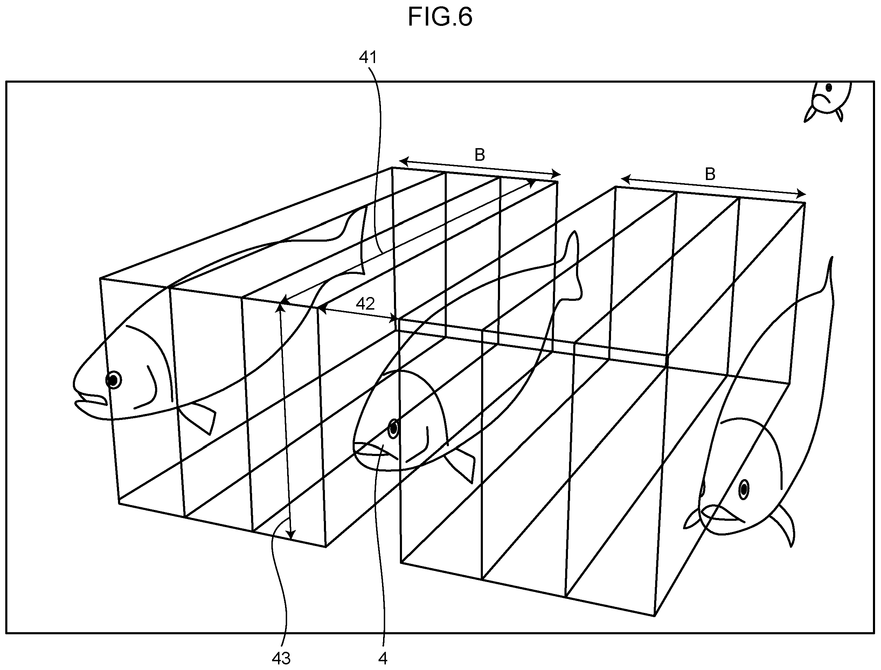

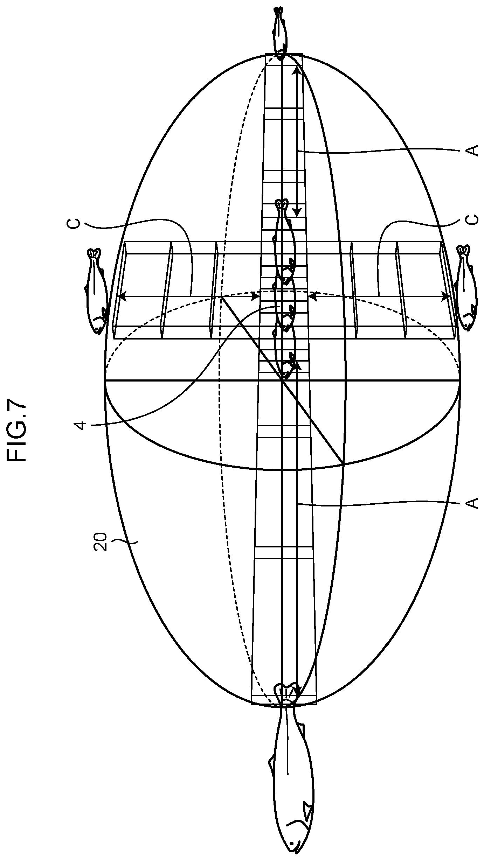

Furthermore, the generation unit 152 generates the second machine learning model M2 that has been trained to output output information that is information related to a volume of space between fish included in a fish group corresponding to an indistinct region to be learnt in a case where input information that is information related to a CG image generated by computer graphics is input to the second machine learning model M2, the CG image including a fish group to be learnt, the CG image also including: the indistinct region to be learnt that is region where individual fish included in the fish group to be learnt are unable to be visually distinguished; and a shadow region to be learnt corresponding to a shadow of the fish group corresponding to the indistinct region to be learnt. By using the second machine learning model M2, the generation unit 152 estimates the information related to the volume of the space between the fish included in the fish group corresponding to the indistinct region to be learnt. For example, by using the second machine learning model M2, the generation unit 152 may estimate, as an example of the information related to the volume of the space between the fish included in the fish group corresponding to the indistinct region to be learnt, lengths of distances A, B, and C illustrated in FIG. 6 and FIG. 7 described later. Subsequently, the generation unit 152 may input input information that is the information estimated by use of the second machine learning model M2 to the first machine learning model M1, the information being related to the volume of the space between the fish included in the fish group corresponding to the indistinct region to be learnt.

By using a publicly known machine learning model for estimating sizes of fish (that is, the volume of fish) in a nondense region, the generation unit 152 estimates, from a CG image, information related to a volume of fish included in a fish group corresponding to an indistinct region to be learnt. For example, by using the publicly known machine learning model, the generation unit 152 may estimate, as an example of the information related to the volume of the fish included in the fish group corresponding to the indistinct region to be learnt, a fork length 41, a body width 42, and a body depth 43 of fish illustrated in FIG. 6 and FIG. 7 described later. Subsequently, the generation unit 152 may input input information that is the information estimated by use of the publicly known machine learning model to the first machine learning model M1, the information being related to the volume of the fish included in the fish group corresponding to the indistinct region to be learnt. As to a cluster of the fish group corresponding to the indistinct region, velocities, at which the fish in the cluster of the fish group corresponding to the indistinct region swim, are considered to be approximately the same because the cluster moves at a constant velocity in water. Furthermore, the velocity, at which the fish swim, is proportional to sizes of the fish, and sizes of the fish (that is, volumes of the fish) that are in the cluster of the fish group corresponding to the indistinct region are thus considered to be approximately the same. Furthermore, approximate sizes of fish (that is, approximate volumes of the fish) in a fishpond are known. Therefore, in a case where sizes of fish (that is, volumes of the fish) used in a CG image are already known, input information input to the first machine learning model M1 may be information related to a volume of fish included in a fish group corresponding to an indistinct region to be learnt, the information being the known sizes of the fish (that is, the known volumes of the fish).

Furthermore, the generation unit 152 generates the first machine learning model M1 that has been trained to output output information that is a fish count for fish included in a fish group corresponding to an indistinct region to be learnt in a case where input information that is information related to a shadow region to be learnt is input to the first machine learning model M1, the information being information indicating darkness of color of the shadow region to be learnt. For example, the generation unit 152 may input, as the input information, R, G, and B values of the shadow region to be learnt, to the first machine learning model M1, the R, G, and B values being an example of the information indicating the darkness of the color of the shadow region to be learnt.

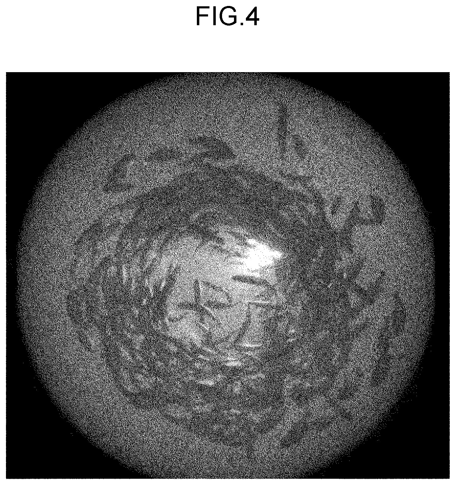

FIG. 4 is a diagram illustrating an example of a CG image according to the embodiment. FIG. 4 is a CG image including a fish group upon a water surface being seen from underwater in a fishpond. By means of computer graphics, the generation unit 152 generates a CG image including an indistinct region to be learnt and a shadow region to be learnt corresponding to a shadow of a fish group corresponding to the indistinct region to be learnt, by generating a state where fish in a fish group are dense and capturing an image using a virtual camera in a zoom-out state. Furthermore, the generation unit 152 generates CG images changed in position of the sun positioned above water in the fishpond and in underwater illuminance according to weather. Subsequently, the generation unit 152 uses the CG images generated, as input information for the first machine learning model M1.

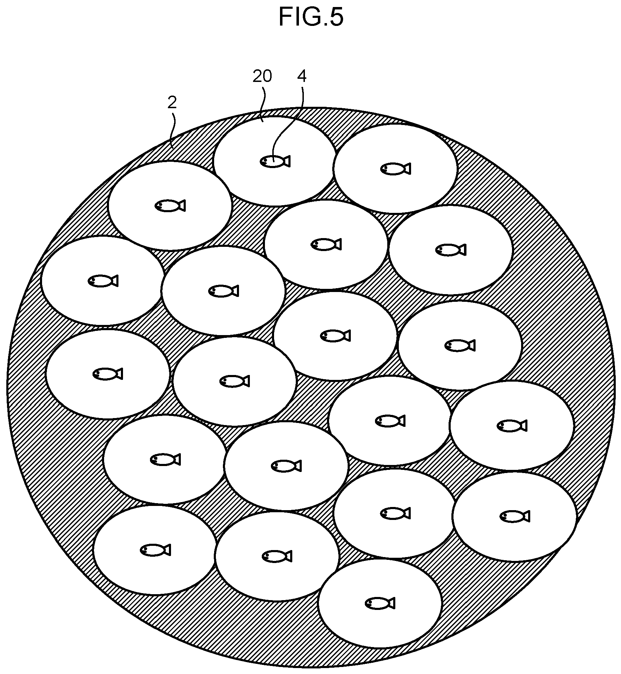

FIG. 5 is a diagram for illustration of a relation between: a cluster of a fish group corresponding to an indistinct region and personal space of fish. Personal space of fish refers to space that maintains comfortable distances for the fish. As illustrated in FIG. 5, in the cluster 2 of the fish group corresponding to the indistinct region, many fish 4 cluster together in a state of being spaced apart from each other by a personal space 20. In other words, this is a state where the cluster of the fish group corresponding to the indistinct region is filled with many rugby ball shaped volumes that are the sum of volumes of the fish 4 included in the fish group corresponding to the indistinct region and volumes of the spaces 20 between the fish included in the fish group corresponding to the indistinct region. Therefore, a fish count for the fish included in the fish group corresponding to the indistinct region is able to be estimated by division of the volume of the cluster 2 of the fish group corresponding to the indistinct region by a volume that is the sum of the volume of the fish 4 included in the fish group corresponding to the indistinct region and the volume of the space 20 between the fish included in the fish group corresponding to the indistinct region.

FIG. 6 and FIG. 7 are diagrams for illustration of an example of personal space of fish. A case where a distance comfortable for fish corresponds to three fish bodies will be described with respect to FIG. 6 and FIG. 7, but a distance comfortable for fish in a dense state may correspond to 0.5 fish bodies, 1 fish body, 1.5 fish bodies, or 2 fish bodies.

FIG. 6 illustrates that distances B between a fish 4 in the middle and those fish swimming alongside and on both sides of the fish 4 in the middle are each a distance that is three times the body width 42 of the fish 4 in the middle. Furthermore, in the example illustrated in FIG. 6, a volume of the fish 4 in the middle is able to be approximately calculated by use of the fork length 41 of the fish 4 in the middle, the body width 42 of the fish 4 in the middle, and the body depth of the fish 4 in the middle.

FIG. 7 illustrates that distances A between the fish 4 in the middle and those fish swimming ahead of and behind the fish 4 in the middle are each a distance that is three times the fork length 41 of the fish 4 in the middle illustrated in FIG. 6. Furthermore, FIG. 7 illustrates that distances C between the fish 4 in the middle and those fish swimming above and below the fish 4 in the middle are each a distance that is three times the body depth 43 of the fish 4 in the middle illustrated in FIG. 6. Each fish included in a fish group swims with the fish's personal space 20 maintained, the fish's personal space 20 being like a rugby ball illustrated in FIG. 7. Furthermore, in the example illustrated in FIG. 7, the volume of the personal space 20 of the fish is able to be approximately calculated by use of the distances A, B, and C.

### Estimation Unit 153

The estimation unit 153 estimates a fish count for fish included in a fish group corresponding to an indistinct region from information related to an image, by using the first machine learning model M1 generated by the generation unit 152. Specifically, the estimation unit 153 estimates the fish count for the fish included in the fish group corresponding to the indistinct region from the information related to the image, the information being: the image; information related to the indistinct region; and information related to a shadow region. More specifically, the estimation unit 153 estimates the fish count for the fish included in the fish group corresponding to the indistinct region, from the information related to the indistinct region, the information being: information related to a volume of a cluster of the fish group corresponding to the indistinct region; information related to a volume of space between the fish included in the fish group corresponding to the indistinct region; and information related to a volume of the fish included in the fish group corresponding to the indistinct region. Furthermore, the estimation unit 153 estimates the fish count for the fish included in the fish group corresponding to the indistinct region, from the information related to the shadow region, the information being information indicating darkness of color of the shadow region.

The estimation unit 153 estimates the information related to the volume of the space between the fish included in the fish group corresponding to the indistinct region and estimates, on the basis of the information related to the volume of the space between the fish, the fish count for the fish included in the fish group corresponding to the indistinct region.

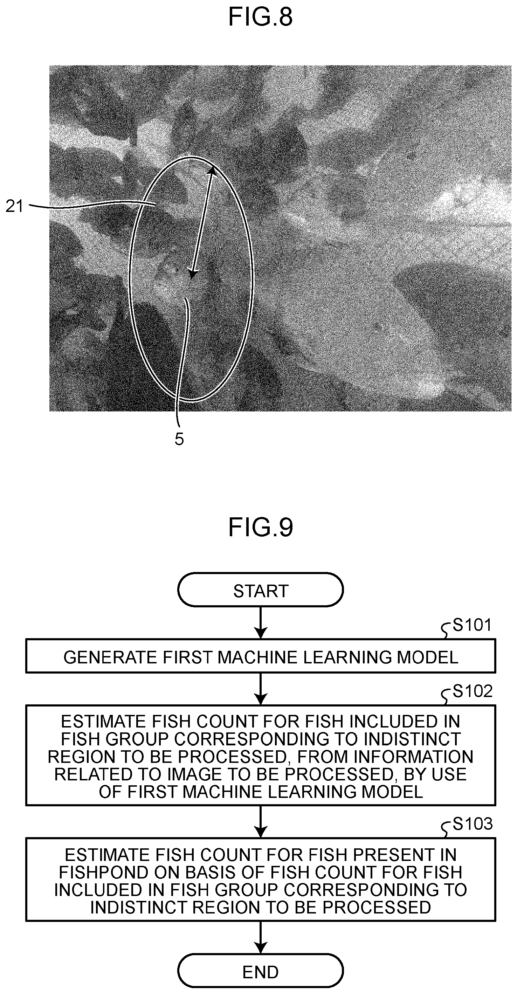

FIG. 8 is a diagram for illustration of a process of estimating personal space of fish on the basis of a red image including a fish group irradiated with red light. On the basis of the red image including a red fish group of a fish group corresponding to an indistinct region, the red fish group being the fish group irradiated with the red light, the estimation unit 153 estimates information related to a volume of space between fish included in the fish group corresponding to the indistinct region.

Specifically, the estimation unit 153 acquires reference information indicating a relation between a reference luminance value and a reference distance, the reference luminance value being a luminance value in an object area of a reference image including a reference object in water, the reference object having been irradiated with red light, the object area having been occupied by the reference object, the reference image having been captured by an imaging device in the water, the reference distance being a distance from the imaging device to the reference object. Subsequently, on the basis of comparisons between the reference information and fish luminance values that are luminance values in fish regions occupied by individual fish included in the red fish group, the fish areas being of the red image, the estimation unit 153 estimates fish distances that are distances from the imaging device to the individual fish included in the red fish group. Subsequently, on the basis of the fish distances, the estimation unit 153 estimates relative distances between the fish included in the red fish group. Subsequently, on the basis of the relative distances between the fish, the estimation unit 153 estimates the information related to the volume of the space between the fish included in the fish group corresponding to the indistinct region.

Furthermore, on the basis of the average of the relative distances between the fish, the estimation unit 153 estimates the information related to the volume of the space between the fish included in the fish group corresponding to the indistinct region.

Furthermore, on the basis of the time average of the relative distances between the fish, the estimation unit 153 estimates the information related to the volume of the space between the fish included in the fish group corresponding to the indistinct region.

### Output Control Unit 154

The output control unit 154 performs control to display an estimation result estimated by the estimation unit 153 on a screen.

### 3. Information Processing Processes

FIG. 9 is a flowchart illustrating information processing processes by the information processing apparatus 100 according to the embodiment. In FIG. 9, the generation unit 152 generates a first machine learning model that has been trained to output output information that is a fish count for fish included in a fish group corresponding to an indistinct region that is a region of a CG image including a fish group and a shadow of the fish group, the region being where individual fish included in the fish group are unable to be visually distinguished, in a case where input information that is information related to the CG image is input to the first machine learning model (Step S101).

Furthermore, by using the first machine learning model generated by the generation unit 152, the estimation unit 153 estimates a fish count for fish included in a fish group corresponding to an indistinct region to be processed, from information related to an image to be processed including a fish group to be processed and a shadow of the fish group to be processed, the indistinct region to be processed being a region where individual fish included the fish group to be processed are unable to be distinguished (Step S102).

Subsequently, on the basis of the fish count for the fish included in the fish group corresponding to the indistinct region to be processed, the estimation unit 153 estimates a fish count for fish that are present in a fishpond (Step S103).

### 4. Modified Example

The above described embodiment represents an example, and various modifications and applications thereof are possible. A modified example of the embodiment will be described hereinafter.

A case where the estimation unit 153 estimates, on the basis of a red image including a red fish group that is a fish group irradiated with red light, information related to a volume of space between fish included in a fish group corresponding to an indistinct region has been described with respect to the embodiment above, the red fish group being of the fish group corresponding to the indistinct region. In the modified example, by using a second machine learning model M2 generated by a generation unit 152, an estimation unit 153 estimates information related to a volume of space between fish included in a fish group corresponding to an indistinct region from an image. For example, by inputting the image to the second machine learning model M2, the estimation unit 153 estimates an estimation result that is the information related to the volume of the space between the fish included in the fish group corresponding to the indistinct region.

### 5. Effects

As described above, the information processing apparatus 100 according to the embodiment includes the acquisition unit 151 and the estimation unit 153. The acquisition unit 151 acquires an image including a fish group and including an indistinct region that is a region where individual fish included in the fish group are unable to be visually distinguished and a shadow region corresponding to a shadow of a fish group corresponding to the indistinct region. The estimation unit 153 estimates information related to a volume of space between fish included in the fish group corresponding to the indistinct region and estimates, on the basis of the information related to the volume of the space between the fish, a fish count for the fish included in the fish group corresponding to the indistinct region.

The information processing apparatus 100 is thereby able to, for example, estimate the fish count for the fish included in the fish group corresponding to the indistinct region by dividing a volume of a cluster of the fish group corresponding to the indistinct region by a volume resulting from addition of the volume of the space between the fish included in the fish group corresponding to the indistinct region and a volume of the fish together. Therefore, the information processing apparatus 100 is able to estimate a fish count for fish included in a fish group corresponding to a region of an image, the region being where the individual fish are unable to be visually distinguished. Furthermore, because the information processing apparatus 100 is able to estimate the fish count for the fish included in the fish group corresponding to the region of the image, the region being where the individual fish are unable to be visually distinguished, the information processing apparatus 100 enables contribution to achievement of Goal 9, "Industry, Innovation, and Infrastructure", of Sustainable Development Goals (SDGs).

Furthermore, on the basis of a red image including a red fish group of the fish group corresponding to the indistinct region, the red fish group being a fish group irradiated with red light, the estimation unit 153 estimates the information related to the volume of the space between the fish included in the fish group corresponding to the indistinct region.

The information processing apparatus 100 is thereby able to estimate the information related to the volume of the space between the fish included in the fish group corresponding to the indistinct region in a case where the red image including the red fish group that is the fish group irradiated with the red light is able to be acquired by irradiation of the fish group corresponding to the indistinct region with the red light.

Furthermore, the estimation unit 153: estimates, on the basis of comparisons between reference information and fish luminance values, fish distances that are distances from an imaging device to individual fish included in the red fish group, the reference information indicating a relation between a reference luminance value and a reference distance that is a distance from the imaging device to a reference object, the reference luminance value being a luminance value in an object area of a reference image including the reference object in water, the reference object having been irradiated with the red light, the reference image having been captured by the imaging device in the water, the object area having been occupied by the reference object, the fish luminance values being luminance values in fish regions of the red image, the fish regions having been occupied by individual fish included in the red fish group; estimates, on the basis of the fish distances, relative distances between the fish included in the red fish group; and estimates, on the basis of the relative distances between the fish, the information related to the volume of the space between the fish included in the fish group corresponding to the indistinct region.

The information processing apparatus 100 is thereby able to estimate the fish distances that are the distances from the imaging device to the individual fish included in the red fish group, and is thus able to, for example, estimate, on the basis of the fish distances, the relative distances between the fish included in the red fish group and estimate, on the basis of the relative distances between the fish, the information related to the volume of the space between the fish included in the fish group corresponding to the indistinct region.

Furthermore, on the basis of the average of the relative distances between the fish, the estimation unit 153 estimates the information related to the volume of the space between the fish included in the fish group corresponding to the indistinct region.

The information processing apparatus 100 is thereby able to precisely estimate the information related to the volume of the space between the fish included in the fish group corresponding to the indistinct region.

Furthermore, on the basis of the time average of the relative distances between the fish, the estimation unit 153 estimates the information related to the volume of the space between the fish included in the fish group corresponding to the indistinct region.

The information processing apparatus 100 is thereby able to precisely estimate the information related to the volume of the space between the fish included in the fish group corresponding to the indistinct region.

Furthermore, the information processing apparatus 100 further includes the generation unit 152. The generation unit 152 generates a first machine learning model that has been trained to output output information that is information related to a volume of space between fish included in a fish group corresponding to an indistinct region to be learnt in a case where input information that is information related to a CG image including a fish group to be learnt is input to the first machine learning model, the CG image having been generated by computer graphics and including the indistinct region to be learnt and a shadow region to be learnt corresponding to a shadow of a fish group corresponding to the indistinct region to be learnt, the indistinct region to be learnt being a region where individual fish included in the fish group to be learnt are unable to be visually distinguished. By using the first machine learning model generated by the generation unit 152, the estimation unit 153 estimates information related to a volume of space between fish included in a fish group corresponding to an indistinct region from an image.

The information processing apparatus 100 is thereby able to estimates the information related to the volume of the space between the fish included in the fish group corresponding to the indistinct region from the image by using the first machine learning model, even in a case where a red image including a red fish group that is a fish group irradiated with red light is unable to be acquired by irradiation of the fish group corresponding to the indistinct region with the red light.

Furthermore, the generation unit 152 generates a second machine learning model that has been trained to estimate a fish count for fish included in a fish group corresponding to an indistinct region to be learnt in a case where input information that is information related to a CG image including a fish group to be learnt is input to the second machine learning model, the CG image having been generated by computer graphics and including the indistinct region to be learnt and a shadow region to be learnt corresponding to a shadow of the fish group corresponding to the indistinct region to be learnt, the indistinct region to be learnt being a region where individual fish included in the fish group to be learnt are unable to be visually distinguished. The estimation unit 153 estimates a fish count for fish included in a fish group corresponding to an indistinct region from information related to an image, by using the second machine learning model generated by the generation unit 152.

The information processing apparatus 100 is thereby able to precisely estimate the fish count for the fish included in the fish group corresponding to the indistinct region from the information related to the image by using the second machine learning model.

Furthermore, the generation unit 152 generates the second machine learning model that has been trained to output the output information that is the fish count for the fish included in the fish group corresponding to the indistinct region to be learnt in a case where the input information that is the information related to the CG image is input to the second machine learning model, the information being: the CG image; information related to the indistinct region to be learnt; and information related to the shadow region to be learnt. The estimation unit 153 estimates the fish count for the fish included in the fish group corresponding to the indistinct region from the information related to the image, the information being: the image: information related to the indistinct region; and information related to a shadow region.

The information processing apparatus 100 is thereby able to precisely estimate the fish count for the fish included in the fish group corresponding to the indistinct region from the information related to the image by using the second machine learning model that has been trained with the image, the information related to the indistinct information, and the information related to the shadow region.

Furthermore, the generation unit 152 generates the second machine learning model that has been trained to output the output information that is the fish count for the fish included in the fish group corresponding to the indistinct region to be learnt in a case where the input information that is the information related to the indistinct region to be learnt is input to the second machine learning model, the information being: information related to a volume of a cluster of the fish group corresponding to the indistinct region to be learnt; information related to a volume of space between the fish included in the fish group corresponding to the indistinct region to be learnt; and information related to a volume of the fish included in the fish group corresponding to the indistinct region to be learnt. The estimation unit 153 estimates a fish count for fish included in a fish group corresponding to an indistinct region, from information related to the indistinct region, the information being: information related to a volume of a cluster of the fish group corresponding to the indistinct region; information related to a volume of space between the fish included in the fish group corresponding to the indistinct region; and information related to a volume of the fish included in the fish group corresponding to the indistinct region.

The information processing apparatus 100 is thereby able to precisely estimate a fish count for fish included in a fish group corresponding to an indistinct region, from information related to an image, by using the second machine learning model that has been trained with the information related to the volume of the cluster of the fish group corresponding to the indistinct region, the information related to the volume of the space between the fish included in the fish group corresponding to the indistinct region, and the information related to the volume of the fish included in the fish group corresponding to the indistinct region.

Furthermore, the generation unit 152 generates the second machine learning model that has been trained to output output information that is a fish count for fish included in a fish group corresponding to an indistinct region to be learnt in a case where input information that is information related to a shadow region to be learnt is input to the second machine learning model, the information being information indicating darkness of color of the shadow region to be learnt. The estimation unit 153 estimates a fish count for fish included in a fish group corresponding to an indistinct region from information related to a shadow region, the information being information indicating darkness of color of the shadow region.

The information processing apparatus 100 is thereby able to precisely estimate the fish count for the fish included in the fish group corresponding to the indistinct region from the information related to the image by using the second machine learning model that has been trained with the information indicating the darkness of the color of the shadow region.

### 6. Hardware Configuration

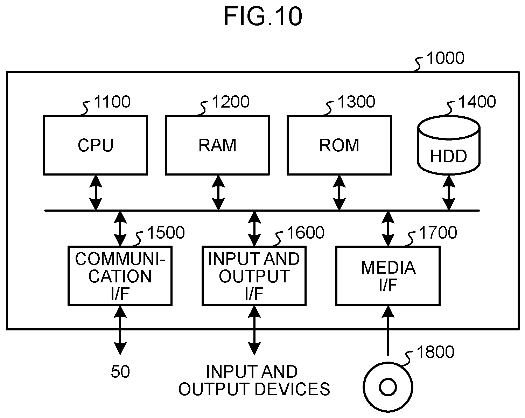

Furthermore, the information processing apparatus 100 according to the embodiment described above is implemented by a computer 1000 configured as illustrated in FIG. 10, for example. FIG. 10 is a hardware configuration diagram illustrating an example of a computer that implements functions of the information processing apparatus 100. The computer 1000 includes a CPU 1100, a RAM 1200, a ROM 1300, an HDD 1400, a communication interface (I/F) 1500, an input and output interface (I/F) 1600, and a media interface (I/F) 1700.

The CPU 1100 operates on the basis of a program stored in the ROM 1300 or the HDD 1400 and controls each unit. The ROM 1300 stores a boot program executed by the CPU 1100 upon start-up of the computer 1000 and stores a program dependent on hardware of the computer 1000, for example.

The HDD 1400 stores a program executed by the CPU 1100 and data used by the program, for example. The communication interface 1500 receives data from another device via a predetermined communication network and transmits the data to the CPU 1100, and transmits data generated by the CPU 1100, to another device via a predetermined communication network.

The CPU 1100 controls output devices, such as a display and a printer, and input devices, such as a keyboard and a mouse, via the input and output interface 1600. The CPU 1100 acquires data from the input devices via the input and output interface 1600. Furthermore, the CPU 1100 outputs generated data to the output devices via the input and output interface 1600.

The media interface 1700 reads a program or data stored in a recording medium 1800 and provides the program or data to the CPU 1100 via the RAM 1200. The CPU 1100 loads the program from the recording medium 1800 onto the RAM 1200 via the media interface 1700 and executes the program loaded. The recording medium 1800 may be, for example: an optical recording medium, such as a digital versatile disc (DVD) or a phase change rewritable disk (PD); a magneto-optical recording medium, such as a magneto-optical disk (MO); a tape medium; a magnetic recording medium; or a semiconductor memory.

For example, in a case where the computer 1000 functions as the information processing apparatus 100 according to the embodiment, the CPU 1100 of the computer 1000 implements functions of the control unit 150 by executing programs loaded on the RAM 1200. The CPU 1100 of the computer 1000 reads and executes these programs from the recording medium 1800, but in another example, the CPU 1100 may acquire these programs from another device via a predetermined communication network.

Some of embodiments of the present application have been described above in detail on the basis of the drawings, but these are just examples, and the present invention may be implemented in any other mode, to which various modifications and improvements have been made on the basis of the aspects described in the disclosure of the invention section and knowledge of those skilled in the art.

### 7. Others

Furthermore, of any processing described with respect to the above described embodiment and modified example, all or part of any processing described as being performed automatically may be performed manually, or all or part of any processing described as being performed manually may be performed automatically by a publicly known method. In addition, the processing processes, the specific names, and the information including the various data and parameters, which have been described above and illustrated in the drawings, may be optionally modified unless particularly stated otherwise. For example, the various kinds of information illustrated in the drawings are not limited to the information illustrated therein.

Furthermore, the components of each apparatus/device in the drawings have been illustrated functionally and conceptually, and are not necessarily physically configured as illustrated in the drawings. That is, specific modes of separation and integration of each apparatus/device are not limited to those illustrated in the drawings, and all or part of each apparatus/device may be configured to be separated or integrated functionally or physically in any units according to various loads and use situations.

Furthermore, the embodiment and modified example described above may be combined, as appropriate, so long as no contradiction in the processing arises from the combination.

### Reference Signs List

- 100: INFORMATION PROCESSING APPARATUS
- 110: COMMUNICATION UNIT
- 120: STORAGE UNIT
- 130: INPUT UNIT
- 140: OUTPUT UNIT
- 150: CONTROL UNIT
- 151: ACQUISITION UNIT
- 152: GENERATION UNIT
- 153: ESTIMATION UNIT
- 154: OUTPUT CONTROL UNIT

## Claims

1. An information processing program that causes a computer to execute:
an acquisition process of acquiring an image including a fish group, the image including: an indistinct region that is a region where individual fish included in the fish group are unable to be visually distinguished; and a shadow region corresponding to a shadow of a fish group corresponding to the indistinct region; and
an estimation process of estimating information related to a volume of space between fish included in the fish group corresponding to the indistinct region, and estimating, based on the information related to the volume of the space between the fish, a fish count for the fish included in the fish group corresponding to the indistinct region.

2. The information processing program according to claim 1, wherein in the estimation process, the information related to the volume of the space between the fish included in the fish group corresponding to the indistinct region is estimated based on a red image including a red fish group of the fish group corresponding to the indistinct region, the red fish group being a fish group irradiated with red light.

3. The information processing program according to claim 2, wherein in the estimation process: fish distances that are distances from an imaging device to individual fish included in the red fish group are estimated based on comparisons between reference information and fish luminance values that are luminance values in fish regions of the red image, the fish regions having been occupied by individual fish included in the red fish group, the reference information indicating a relation between a reference luminance value and a reference distance, the reference luminance value being a luminance value in an object region of a reference image including a reference object in water, the reference object having been irradiated with the red light, the reference image having been captured by the imaging device in the water, the object region having been occupied by the reference object, the reference distance being a distance from the imaging device to the reference object; relative distances between the fish included in the red fish group are estimated based on of the fish distances; and the information related to the volume of the space between the fish included in the fish group corresponding to the indistinct region is estimated based on the relative distances between the fish.

4. The information processing program according to claim 3, wherein in the estimation process, the information related to the volume of the space between the fish included in the fish group corresponding to the indistinct region is estimated based on an average of the relative distances between the fish.

5. The information processing program according to claim 3, wherein in the estimation process, the information related to the volume of the space between the fish included in the fish group corresponding to the indistinct region is estimated based on a time average of the relative distances between the fish.

6. The information processing program according to claim 1, further comprising:
a generation process of generating a first machine learning model that has been trained to output output information that is information related to a volume of space between fish included in a fish group corresponding to an indistinct region to be learnt in a case where input information that is information related to a CG image including a fish group to be learnt is input to the first machine learning model, the CG image having been generated by computer graphics and including: the indistinct region to be learnt that is a region where individual fish included in the fish group to be learnt are unable to be visually distinguished; and a shadow region to be learnt corresponding to a shadow of the fish group corresponding to the indistinct region to be learnt, wherein
in the estimation process, by use of the first machine learning model generated by the generation process, the information related to the volume of the space between the fish included in the fish group corresponding to the indistinct region is estimated from the image.

7. The information processing program according to claim 1, further comprising:
a generation process of generating a second machine learning model that has been trained to estimate a fish count for fish included in a fish group corresponding to an indistinct region to be learnt in a case where input information that is information related to a CG image including a fish group to be learnt is input to the second machine learning model, the CG image having been generated by computer graphics and including: the indistinct region to be learnt that is a region where individual fish included in the fish group to be learnt are unable to be visually distinguished; and a shadow region to be learnt corresponding to a shadow of the fish group corresponding to the indistinct region to be learnt, wherein
in the estimation process, by use of the second machine learning model generated by the generation process, the fish count for the fish included in the fish group corresponding to the indistinct region is estimated from information related to the image.

8. The information processing program according to claim 7, wherein
in the generation process, the second machine learning model that has been trained to output the output information that is the fish count of the fish included in the fish group corresponding to the indistinct region to be learnt in a case where the input information that is the information related to the CG image is input to the second machine learning model is generated, the information being: the CG image; information related to the indistinct region to be learnt; and information related to the shadow region to be learnt, and
in the estimation process, the fish count for the fish included in the fish group corresponding to the indistinct region is estimated from the information related to the image, the information being: the image, information related to the indistinct region, and information related to the shadow region.

9. The information processing program according to claim 8, wherein
in the generation process, the second machine learning model that has been trained to output the output information that is the fish count for the fish included in the fish group corresponding to the indistinct region to be learnt in a case where the input information that is the information related to the indistinct region to be learnt is input to the second machine learning model is generated, the information being: information related to a volume of a cluster of the fish group corresponding to the indistinct region to be learnt; information related to a volume of space between the fish included in the fish group corresponding to the indistinct region to be learnt; and information related to a volume of the fish included in the fish group corresponding to the indistinct region to be learnt, and
in the estimation process, the fish count for the fish included in the fish group corresponding to the indistinct region is estimated from the information related to the indistinct region, the information being: information related to a volume of a cluster of the fish group corresponding to the indistinct region; information related to the volume of the space between the fish included in the fish group corresponding to the indistinct region; and information related to a volume of the fish included in the fish group corresponding to the indistinct region.

10. The information processing program according to claim 8, wherein
in the generation process, the second machine learning model that has been trained to output the output information that is the fish count for the fish included in the fish group corresponding to the indistinct region to be learnt in a case where the input information that is the information related to the shadow region to be learnt is input to the second machine learning model is generated, the information being information indicating darkness of color of the shadow region to be learnt, and
in the estimation process, the fish count for the fish included in the fish group corresponding to the indistinct region is estimated from the information related to the shadow region, the information being information indicating darkness of color of the shadow region.

11. An information processing apparatus, comprising:
an acquisition unit that acquires an image including a fish group, the image including: an indistinct region that is a region where individual fish included in the fish group are unable to be visually distinguished; and a shadow region corresponding to a shadow of a fish group corresponding to the indistinct region; and
an estimation unit that estimates information related to a volume of space between fish included in the fish group corresponding to the indistinct region, and estimates, based on the information related to the volume of the space between the fish, a fish count for the fish included in the fish group corresponding to the indistinct region.

12. An information processing method implemented by a program executed by an information processing apparatus, the information processing method including:
an acquisition step of acquiring an image including a fish group, the image including: an indistinct region that is a region where individual fish included in the fish group are unable to be visually distinguished; and a shadow region corresponding to a shadow of a fish group corresponding to the indistinct region; and
an estimation step of estimating information related to a volume of space between fish included in the fish group corresponding to the indistinct region, and estimating, based on the information related to the volume of the space between the fish, a fish count for the fish included in the fish group corresponding to the indistinct region.
